(19) Europäisches Patentamt

European Patent Office

Office européen des brevets

(11) Veröffentlichungsnummer: **0 307 706 B1**

(12) **EUROPÄISCHE PATENTSCHRIFT**

(45) Veröffentlichungstag der Patentschrift: **03.06.92**

(21) Anmeldenummer: **88114072.7**

(22) Anmeldetag: **29.08.88**

(51) Int. Cl.⁵: **H02K 29/00**, H02K 1/27, H02K 21/28

(54) **Magnetanordnung.**

(30) Priorität: **11.09.87 DE 3730596**

(43) Veröffentlichungstag der Anmeldung:
**22.03.89 Patentblatt 89/12**

(45) Bekanntmachung des Hinweises auf die
Patenterteilung:
**03.06.92 Patentblatt 92/23**

(84) Benannte Vertragsstaaten:
**CH DE ES FR GB IT LI SE**

(56) Entgegenhaltungen:
**FR-A- 2 403 676**
**FR-A- 2 593 974**

**PATENT ABSTRACTS OF JAPAN, Band 6, Nr.
42 (E-98)[920], 16. März 1982; JP-A-56 157 251**

**PATENT ABSTRACTS OF JAPAN, Band 6, Nr.
147 (E-123)[1025], 6. August 1982; & JP-A-57
71 257**

**PATENT ABSTRACTS OF JAPAN, Band 6, Nr.
218 (E-139)[1096], 2. November 1982; & JP-
A-57 122 663**

**RESEARCH DISCLOSURE, Nr. 207, Juli 1981,
Seite 251, Zusammenfassung Nr. 20701, Havant, Hampshire, GB; "Rotors for motors"**

**PATENT ABSTRACTS OF JAPAN, Band 7, Nr.
144 (E-183)[1289], 23. Juni 1983; & JP-A-58 54
858**

(73) Patentinhaber: **SIEMENS AKTIENGESELL-
SCHAFT**
**Wittelsbacherplatz 2**
**W-8000 München 2(DE)**

(72) Erfinder: **Schmidt, Helmut**
**Unterer Weinberg 44**
**W-8701 Reichenberg(DE)**
Erfinder: **Grecksch, Ernst, Dr.**
**Konrad-Adenauer-Strasse 47**
**W-8702 Estenfeld(DE)**
Erfinder: **Eisenmann, Manfred, Dipl.-Ing. FH**
**Nikolaus-Fey-Strasse 19**
**W-8714 Wiesentheid(DE)**

**Beschreibung**

Die Erfindung bezieht sich auf eine Magnetanordnung gemäß Oberbegriff des Anspruchs 1; eine derartige Magnetanordnung ist für einen dauermagneterregten Läufer aus RESEARCH DISCLOSURE, Nr.207, Juli 1981, Seite 251 bekannt.

Bei der vorgenannten bekannten Magnetanordnung sind über den Außenumfang eines Rotortragkörpers acht Einzelsegmente mit in Abstand voreinander liegenden Stirnseiten aufgeklebt, die mehrpolig mit je Einzelsegment symmetrischer Polaufteilung radial magnetisiert sind.

Durch die DE-AS 11 81 306 ist eine Ständer-Magnetanordnung für einen Elektrokleinmotor bekannt, die aus zumindest zwei als schalenförmige Pole ausgebildeten, in radialer Richtung magnetisierten Einzelsegmenten besteht. Das eine Einzelsegment ist dabei im Sinne eines Nordpols und das andere Einzelsegment im Sinne eines Südpols magnetisiert.

Die DE-OS 28 45 702 betrifft eine Läufer-Magnetanordnung mit einem konzentrisch zur Läuferwelle eines Synchronmotors gehalterten geschlossenen Magnetring, der über den Umfang in wechselnder Polfolge radial magnetisiert ist.

Durch JP-A-5 771 257 ist auch eine ähnliche Läufer-Magnetanordnung bekannt.

Aufgabe der vorliegenden Erfindung ist es, bei einer Magnetanordnung der eingangs genannten Art trotz minimaler Fertigungskosten eine hohe Leistungsdichte erzielen zu können. Ausgehend von der Erkenntnis, daß für einen hohen Wirkungsgrad enge Magnettoleranzen und kleine Luftspalte maßgebend sind, bedingt dies insbesondere einen geringen Kostenanteil für die im Sinne geringerer Toleranzen genaue Bearbeitung der vorzugsweise kreissegmentförmig auszubildenden Magnete.

Die Lösung der Aufgabe ist bei einer Magnetanordnung der eingangs genannten Art erfindungsgemäß durch die Lehre des Anspruchs 1 möglich; vorteilhafte Ausgestaltungen der Erfindung sind jeweils Gegenstand der Unteransprüche.

Durch die Verwendung von drei, vorzugsweise kreissegmentförmigen Einzelsegmenten, die jeweils mit unsymmetrischer Polaufteilung mehrpolig magnetisiert sind und die bei hoher, beliebiger Polzahl eine größere tangentiale Länge im Vergleich zu herkömmlichen vergleichbaren Einzelsegmenten aufweisen, lassen sich die zur Zahl der benötigten Einzelsegmente annähernd proportionalen Kosten für Schleifen, Oberflächenüberzug, Handhabung, Kleben und Montage der Einzelsegmente reduzieren, da die erfindungsgemäße Magnetanordnung bei geschlossener Magnetumfangsfläche weniger Einzelsegmente benötigt als bisherige Magnetanordnungen und trotzdem jede gewünschte Polzahl zuläßt.

Einen vorteilhaften Einsatz von Einheitsbauteilen erhält man durch die Verwendung tangential gleichlanger Einzelsegmente, durch die das insbesondere für eine automatische Fertigung ungünstige Aussuchen, Aufnehmen und Montieren unterschiedlich großer Einzelsegmente vermieden wird. Gleichzeitig ergibt sich durch die Bevorratung nur eines Typs von Einzelsegmenten für eine bestimmte Baugröße eines Elektromotors eine kostengünstige Lagerhaltung, wobei durch die unsymmetrische Polaufteilung je Einzelsegment und die benachbarte Einzelsegmente in Umfangsrichtung übergreifende Polteilung keine Beschränkung in der Auswahl der Polzahl auferlegt ist.

Der nach einer besonderen Ausgestaltung der Erfindung vorgesehene Einsatz bei z.B. durch die FR-A-2 565 017 bekannten, Plattenspeichern erfordert bei hoher Leistungsdichte eine zuverlässige Verhinderung einer Partikelablösung von den Einzelsegmenten, da die Speicherplatten im Reinraum des Plattenspeichers rotieren. Die gewünschte hohe Leistungsdichte wird dabei durch einen kleinen Luftspalt bzw. mit engen Magnet-Toleranzen, d.h. mit einem hohen Schleifaufwand erzielt. Die Partikelablösung wird durch einen Oberflächenüberzug der Einzelsegmente verhindert.

Die Erfindung sowie weitere vorteilhafte Ausgestaltungen werden im folgenden anhand schematisch dargestellter Ausführungsbeispiele in der Zeichnung näher erläutert. Darin zeigen:

FIG 1     einen axialen Längsschnitt durch einen zum Antrieb einer Plattenspindel eines Plattenspeicherantriebs vorgesehenen Außenläufermotor;

FIG 2     eine stirnseitige Draufsicht auf eine vierpolige Magnetanordnung mit drei den gesamten Umfang belegenden Einzelsegmenten;

FIG 3     eine stirnseitige Draufsicht auf eine achtpolige Magnetanordnung mit drei den gesamten Umfang belegenden Einzelsegmenten.

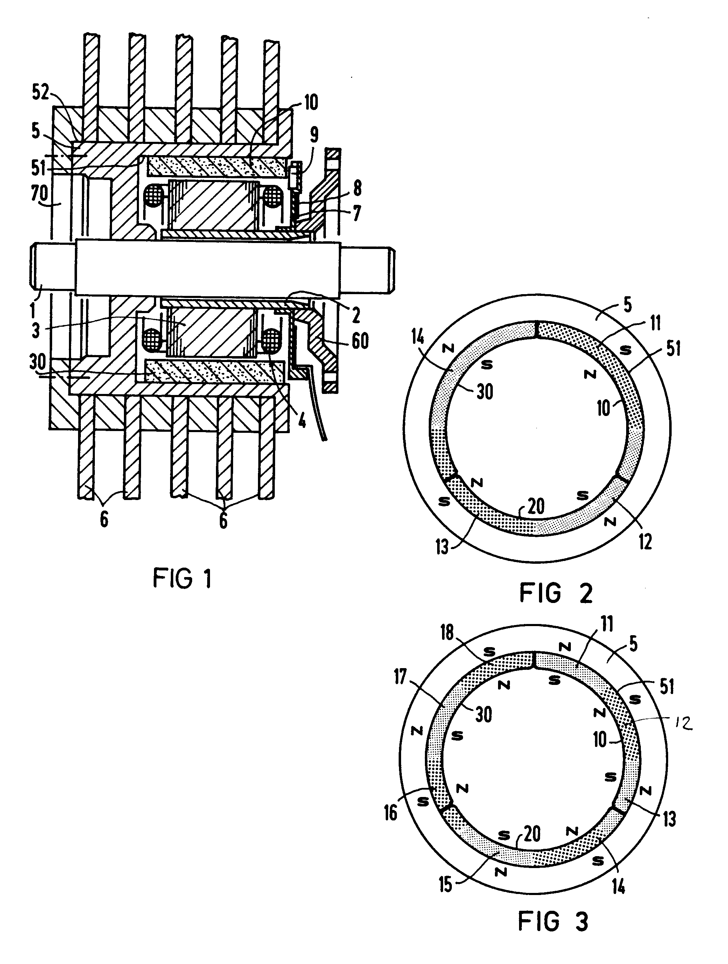

FIG 1 zeigt in einem axialen Längsschnitt einen Außenläufermotor, der eine am linken Ende mit der Läuferwelle 1 fest verbundene Plattenspindel 5 eines Plattenspeichers antreibt. Die Läuferwelle 1 ist in hier nicht näher dargestellter Weise beidseitig drehbar gelagert und zwischen dieser Lagerung von einer Innenhülse 2 umgeben, auf die das Statorblechpaket 3 mit der Statorwicklung 4 aufgedrückt ist. Das rechte Ende der Innenhülse 2 wird von einem Befestigungsflansch 60 aufgenommen, mit dem der gesamte Plattenspeicherantrieb in einem Datenverarbeitungsgerät gehalten wird. Auf dem rechten Ende der Innenhülse 2 ist außerdem eine nicht näher erläuterte Trägerplatte 7 für elektrische Steuerelemente befestigt, die sich radial bis vor die rechten freien Stirnseiten der Einzelsegmente 10, 30 erstreckt; auf der nach außen liegenden Stirnseite der Trägerplatte 7 ist eine flexible Leiterfolie 8 und auf der nach innen liegenden Stirnseite sind Hallwandler, von denen nur ein Hallwandler 9 im Schnitt sichtbar ist, befestigt. An der Außen-Umfangsfläche 52 der als Läuferglocke des Außenläufermotors ausgebildeten Plattenspindel 5 sind mittels eines Spannringes 70 Speicherplatten 6 befestigt.

An der Innen-Umfangsfläche 51 der Plattenspindel 5 sind radial dem Statorblechpaket 3 gegenüberliegend magnetisierte Einzelsegmente angeordnet, von denen in FIG 1 zwei Einzelsegmente 10, 30 im Schnitt sichtbar sind.

FIG 2 zeigt in einer stirnseitigen Draufsicht eine Ausführungsform der an der Innen-Umfangsfläche 51 der Plattenspindel 5 gemäß FIG 1 befestigten Magnetanordnung. Sie besteht aus drei tangential gleichlangen Einzelsegmenten 10, 20, 30, die eine den gesamten Innen-Umfang belegende Magnetfläche bilden. Durch eine ungleiche Polteilung bei zwei Einzelsegmenten 10, 30 und durch eine zwei benachbarte Einzelsegmente übergreifende Polteilung erhält man bei nur drei Einzelsegmenten 10, 20, 30 eine vierpolige Magnetisierung. Im einzelnen sind die Einzelsegmente 10, 20, 30 gemäß einer vorteilhaften Ausgestaltung der Erfindung mit den Polen 11-14 in einer über den Umfang wechselnden Polfolge derart belegt, daß ein erstes Einzelsegment 10 mit einem vollständigen ersten Pol 11 und 1/3 eines folgenden zweiten Poles 12 belegt ist, daß ein nächstfolgendes Einzelsegment 20 mit 2/3 des zweiten Poles 12 und 2/3 eines dritten Poles 13 belegt ist und daß ein drittes Einzelsegment 30 mit 1/3 des dritten Poles 13 und einem vollständigen vierten Pol 14 belegt ist.

FIG 3 zeigt in einer stirnseitigen Draufsicht eine weitere Ausführungsform der erfindungsgemäßen Magnetanordnung. Sie besteht ebenfalls aus drei tangential gleichlangen Einzelsegmenten 10, 20, 30, die eine die gesamte Innen-Umfangsfläche 51 der Magnetspindel 5 gemäß FIG 1 belegende Magnetfläche bilden und von denen zwei Einzelsegmente 10, 30 dreipolig und ein Einzelsegment 20 vierpolig magnetisiert sind, so daß sich eine achtpolige Magnetanordnung ergibt. Im einzelnen sind die Einzelsegmente 10,20,30 gemäß einer vorteilhaften Ausgestaltung der Erfindung mit den Polen 11-18 in einer über den Umfang wechselnden Polfolge derart belegt, daß ein erstes Einzelsegment 10 mit einem vollständigen ersten Pol 11 und einem vollständigen zweiten Pol 12 und 2/3 eines dritten Poles 13 belegt ist, daß ein nächstfolgendes zweites Einzelsegment 20 mit 1/3 des dritten Poles 13 und einem vollständigen vierten Pol 14 und einem vollständigen fünften Pol 15 und 1/3 eines sechsten Poles 16 belegt ist und daß ein drittes Einzelsegment 30 mit 2/3 des sechsten Poles 16

und einem vollständigen siebten Pol 17 und einem vollständigen achten Pol 18 belegt ist.

Anstelle des in den Ausführungsbeispielen gezeigten Außenläufermotors kann selbstverständlich auch ein Innenläufermotor zum vorteilhaften Einsatz der Erfindung vorgesehen werden, ohne daß dadurch deren Konzept verlassen wird.

Es dürfte ersichtlich sein, daß der Zweck, den Aufwand für die Bearbeitung und die Montage der Magnetanordnung zu verringern, erfindungsgemäß durch eine Magnetanordnung erzielt wird, bei der über den Umfang verteilt angeordnete Einzelsegmente vorgesehen sind, deren Zahl kleiner ist als die Zahl der Pole und von denen zumindest ein Einzelsegment mehrpolig mit unsymmetrischer Polteilung magnetisiert ist.

**Patentansprüche**

1. Magnetanordnung für einen permanentmagnetisch erregten Elektromotor mit einer den gesamten Umfang belegenden, im Sinne einer über den Umfang wechselnden Polfolge radial magnetisierten Magnetfläche, die aus in Umfangsrichtung aufeinanderfolgenden, mehrpolig magnetisierten Einzelsegmenten zusammengesetzt ist, **dadurch gekennzeichnet,** daß die Magnetfläche aus drei Einzelsegmenten (10;20; 30) mit einer zwei benachbarte Einzelsegmente (10;20 bzw.20;30 bzw.30;10) übergreifenden Polteilung gebildet ist (FIG 2,3).

2. Magnetanordnung nach Anspruch 1, **gekennzeichnet** durch drei tangential gleichlange Einzelsegmente (10,20,30) (FIG 2,3).

3. Magnetanordnung nach Anspruch 1 oder 2, **dadurch gekennzeichnet,** daß bei einer vierpoligen Magnetanordnung ein erstes Einzelsegment (10) mit einem vollständigen ersten Pol (11) und 1/3 eines folgenden zweiten Poles (12) belegt ist, daß ein nächstfolgendes Einzelsegment (20) mit 2/3 des zweiten Poles (12) und 2/3 eines dritten Poles (13) belegt ist und daß ein drittes Einzelsegment (30) mit 1/3 des dritten Poles (13) und einem vollständigen vierten Pol (14) belegt ist (FIG 3).

4. Magnetanordnung nach Anspruch 1 oder 2, **dadurch gekennzeichnet,** daß bei einer achtpoligen Magnetanordnung ein erstes Einzelsegment (10) mit einem vollständigen ersten Pol (11) und einem vollständigen zweiten Pol (12) und 2/3 eines dritten Poles (13) belegt ist, daß ein nächstfolgendes zweites Einzelsegment (20) mit 1/3 des dritten Poles (13) und einem vollständigen vierten Pol (14) und einem vollständigen fünften Pol (15) und 1/3 eines sechsten Poles (16) belegt ist und daß ein drittes Einzelsegment (30) mit 2/3 des sechsten Poles (16) und einem vollständigen siebten Pol (17) und einem vollständigen achten Pol (18) belegt ist (FIG 3).

5. Magnetanordnung nach zumindest einem der Ansprüche 1 bis 4, **dadurch gekennzeichnet,** daß die Einzelsegmente (10,20,30) an der Innen-Umfangsfläche einer Läuferglocke eines Außenläufermotors, insbesondere an der Innen-Umfangsfläche (51) einer mit der Läuferwelle (1) fest verbundenen glockenförmigen Plattenspindel (5) eines Plattenspeichers angeordnet sind, deren Außenfläche (52) die Speicherplatten (6) des Plattenspeichers aufnimmt.

## Claims

1. Magnetic arrangement for a permanent-magnetically excited electric motor having a magnetic surface covering the entire circumference and radially magnetized in the sense of a pole sequence alternating over the circumference, the magnetic surface being composed from individual segments in succession in the circumferential direction and being magnetized in a multipole manner, characterized in that the magnetic surface is formed from three individual segments (10;20;30) with a pole spacing covering two adjacent individual segments (10;20 or 20;30 or 30;10) (Figures 2, 3).

2. Magnetic arrangement according to claim 1, characterized by three individual segments (10,20,30) which are of the same length tangentially (Figures 2,3).

3. Magnetic arrangement according to claim 1 or 2, characterized in that with a four-pole magnetic arrangement a first individual segment (10) is covered by a complete first pole (11) and $\frac{1}{3}$ of a subsequent second pole (12), in that a subsequent individual segment (20) is covered by $\frac{2}{3}$ of the second pole (12) and $\frac{2}{3}$ of a third pole (13) and that a third individual segment (30) is covered by $\frac{1}{3}$ of the third pole (13) and a complete fourth pole (14) (Figure 3).

4. Magnetic arrangement according to claim 1 or 2, characterized in that with an eight-pole magnetic arrangement a first individual segment (10) is covered by a complete first pole (11) and a complete second pole (12) and $\frac{2}{3}$ of a third pole (13), in that a subsequent second individual segment (20) is covered by $\frac{1}{3}$ of the third pole (13) and a complete fourth pole (14) and a complete fifth pole (15) and $\frac{1}{3}$ of a sixth pole (16) and in that a third individual segment (30) is covered by $\frac{2}{3}$ of the sixth pole (16) and a complete seventh pole (17) and a complete eighth pole (18) (Figure 3).

5. Magnetic arrangement according to at least one of claims 1 to 4, characterized in that the individual segments (10,20,30) are arranged on the inner circumferential surface of a rotor bell of an external rotor motor, in particular on the inner circumferential surface (51) of a bell-shaped plate spindle (5) of a disc store, the plate spindle being firmly connected to the rotor shaft (1), the outer surface (52) of the plate spindle holding the storage plates (6) of the disc store.

## Revendications

1. Dispositif à aimants pour un moteur électrique à excitation par voie magnétique permanente, comportant, au sens d'une série de pôles alternés sur la périphérie, une surface magnétique à aimantation radiale, qui occupe la totalité de la périphérie et qui est constituée par l'assemblage de segments individuels à aimantation multipolaire et qui se suivent dans le sens périphérique, caractérisé par le fait que la surface magnétique est constituée par trois segments individuels (10; 20; 30)à a pas polaire s'étendant sur deux segments individuels voisins (10; 20-20;30-30;10) (figures 2,3).

2. Dispositif à aimants suivant la revendication 1, caractérisé par trois segments individuels (10, 20, 30) de même longueur tangentielle (figures 2, 3).

3. Dispositif à aimants suivant la revendication 1 ou 2, caractérisé en ce que, pour un dispositif à aimants quadrupolaires, un premier segment individuel (10) est occupé par un premier pôle complet (11) et par un tiers d'un deuxième pôle suivant (12) , en ce qu'un segment individuel immédiatement suivant (20) est occupé par deux tiers du deuxième pôle (12) et par deux tiers du troisième pôle (13), et en ce qu'un troisième segment individuel (30) est occupé par un tiers du troisième pôle (13) et par un quatrième pôle complet (14) (figure 3).

4. Dispositif à aimants suivant la revendication 1 ou 2, caractérisé en ce que, pour un dispositif à aimants à huit pôles, un premier segment individuel (10) est occupé par un premier pôle complet (11) et par un deuxième pôle complet (12) et par les deux tiers d'un troisième pôle (13), en ce qu'un deuxième segment individuel (20) immédiatement suivant est occupé par un tiers du troisième pôle et par un quatrième pôle complet (14) et par un cinquième pôle complet (15) et par un tiers d'un sixième pôle (16), et en ce qu'un troisième segment individuel (30) est occupé par deux tiers du sixième pôle (16) et par un septième pôle complet (7) et par un huitième pôle complet (18) (figure 3).

5. Dispositif à aimants suivant l'une des revendications 1 à 4, caractérisé en ce que les segments individuels (10, 20, 30) sont disposés sur la surface périphérique intérieure d'une cloche d'induit d'un moteur à induit extérieur, notamment sur la surface périphérique intérieure (51) d'une broche (51) en forme de cloche et reliée rigidement à l'arbre de l'induit (1) d'une mémoire à disques, la surface extérieure (52) de la broche recevant les disques de mémoire (6) de la mémoire à disques.

FIG 1

FIG 2

FIG 3